(19) Europäisches Patentamt / European Patent Office / Office européen des brevets

(11) **EP 2 799 917 A1**

(12) **EUROPEAN PATENT APPLICATION**
published in accordance with Art. 153(4) EPC

(43) Date of publication:
**05.11.2014 Bulletin 2014/45**

(51) Int Cl.:
*G02B 5/28* (2006.01)　　*B32B 7/02* (2006.01)
*B32B 27/20* (2006.01)　　*G02B 5/26* (2006.01)

(21) Application number: **12863482.1**

(22) Date of filing: **07.12.2012**

(86) International application number:
**PCT/JP2012/081828**

(87) International publication number:
**WO 2013/099564 (04.07.2013 Gazette 2013/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 JP 2011289191**

(71) Applicant: **Konica Minolta, Inc.**
**Tokyo 100-7015 (JP)**

(72) Inventor: **TAIMA, Yasuo**
**Tokyo 100-7015 (JP)**

(74) Representative: **Gille Hrabal**
**Brucknerstrasse 20**
**40593 Düsseldorf (DE)**

(54) **INFRARED SHIELDING FILM, HEAT REFLECTIVE LAMINATED GLASS USING SAME, AND METHOD FOR PRODUCING HEAT REFLECTIVE LAMINATED GLASS**

(57) An object of the present invention is to provide an infrared shielding film which has high infrared shielding effect for every incident angle of sunlight, and a laminated glass using the infrared shielding film. Provided is an infrared shielding film including at least one unit of a high refractive index layer and a low refractive index layer stacked, which is characterized in that the high refractive index layer includes at least one selected from the group consisting of a polyester, a polycarbonate, and a poly (meth) acrylate, and metal oxide particles.

FIG. 1

10

**Description**

**TECHNICAL FIELD**

The present invention relates to an infrared shielding film, a heat reflective laminated glass using this film, and a method for producing a heat reflective laminated glass.

**BACKGROUND ART**

In recent years, insulated glass has been adopted for architectural glass and vehicle glass, for the purpose of shielding against solar radiation energy into rooms or vehicles to reduce the increase in temperature and cooling load.

While dry processes such as vacuum vapor deposition and sputtering are well known as methods for forming thin films, uniform film formation for large areas is considered difficult, because of the principles and apparatus configurations for the processes. In addition, because of the very slow film formation rates, the processes are high in production cost, and thus not suitable for mass production. Moreover, it is often the case that heat resistance is required for substrate materials for film formation. For example, resin substrate materials are high in coefficient of thermal expansion and shrinkage coefficient, and film peeling or irregularity has been thus caused in some cases, by stress due to the difference in shrinkage percentage between a substrate and a deposited film during the decrease in temperature from the vapor deposition temperature down to room temperature.

In addition, in general, films formed by vapor deposition or sputtering have film hardness, and thus, in the case of forming the films on flexible substrates, curved sections or the like may be cracked or scratched in some cases.

For these reasons, infrared shielding films are conventionally known, which are formed by laminating polymers that differ in refractive index, and heat reflective laminated glass is also disclosed which has the infrared shielding film between two plates of glass. Patent Literature 1 discloses a method of forming a film which has a refractive index easily controlled by drawing the film.

**Citation List**

**Patent Literature**

Patent Literature 1: International Publication No. WO 99/36808

**SUMMARY OF INVENTION**

**Technical Problem**

However, the infrared shielding film disclosed in Patent Literature 1 mentioned above uses the control of the refractive index by drawing the film although the refractive index is easily controlled, and thus has high infrared reflectivity for incident light perpendicular to the film, but for obliquely incident light, undergoes a decrease in infrared reflectivity because of the reduced difference in refractive index. Moreover, when the film is used for glass in a curved shape, such as for vehicles, color unevenness has been further caused by reflections of visible light in some cases.

Therefore, an object of the present invention is to provide an infrared shielding film which has high infrared shielding effect for every incident angle of sunlight, and a laminated glass using the infrared shielding film.

In addition, another obj ect of the present invention is to provide an infrared shielding film which achieves an adequate infrared shielding effect even when the infrared shielding film is used for glass in a curved shape, and has slight color unevenness caused by reflections of visible light, and a laminated glass using the infrared shielding film.

**Solution to Problem**

In order to achieve at least one of the objects of the present invention, here are an infrared shielding film, a heat reflective laminated glass including the infrared shielding film, and a method for producing the heat reflective laminated glass according to an aspect of the present invention.

1. An infrared shielding film including at least one unit of a high refractive index layer and a low refractive index layer stacked, which is characterized in that the high refractive index layer includes at least one selected from the group consisting of a polyester, a polycarbonate, and a poly(meth)acrylate, and metal oxide particles.

2. The infrared shielding film according to the item 1, where the metal oxide particles are titanium oxide particles.

3. A heat reflective laminated glass including: the infrared shielding film according to the item 1 or 2; a pair of interlayer films for sandwiching the infrared shielding film; and a pair of glass plates for sandwiching the infrared shielding film and the interlayer films.

4. The heat reflective laminated glass according to the item 3, where the glass plates have a curved shape.

5. The heat reflective laminated glass according to the item 3 or 4, where the interlayer films contain heat shielding fine particles of 0.2 μm or less in average particle size.

6. A method for producing heat reflective laminated glass, which is characterized in that it includes: a step of obtaining an infrared shielding film by forming a high refractive index layer and a low refractive index layer through co-extrusion with the use of a composition for the formation of a high refractive index layer, which includes at least one selected from the group consisting of polyester, polycarbonate, and poly(meth)acrylate and metal oxide particles, and a composition for the formation of a low refractive index layer; and a step of sandwiching the infrared shielding film between a pair of interlayer films, and further sandwiching the infrared shielding film and the interlayer films between a pair of glass plates.

## BRIEF DESCRIPTION OF DRAWINGS

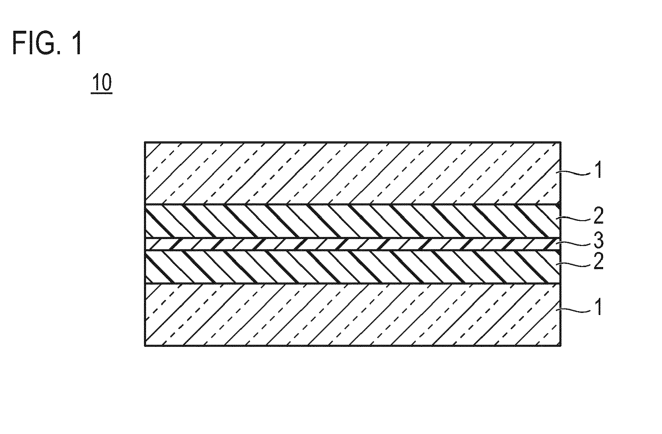

Fig. 1 is a cross-sectional schematic diagram illustrating the configuration of heat laminated glass.

## DESCRIPTION OF EMBODIMENTS

An infrared shielding film according to the present invention includes, as a basic configuration, a unit composed of a high refractive index layer and a low refractive index layer. Further, the film is characterized in that metal oxide particles and a polymer are used for the high refractive index layer.

Conventional high refractive index layers, in particular, high refractive index layers with the refractive index controlled by drawing films have high birefringence derived from molecular orientation, and the refractive indexes of the high refractive index layers are thus highly dependent on the angle of incident light.

In contrast, the infrared shielding film according to the present invention can produce an infrared shielding effect, without depending on the angle of incident light. This is believed to be because the high refractive index layer contains the metal oxide particles, which inhibit the molecular orientation of the polymer, thus reducing birefringence.

In addition, unlike conventional infrared shielding films obtained by laminating only polymers, the high refractive index layer contains the metal oxide particles, the refractive index of the high refractive index layer can be thus increased, and even when the number of units of high and low refractive index layers laminated is reduced to provide a thin film, it becomes possible to achieve a high infrared reflectivity.

The configuration of an infrared shielding film according to the present invention will be described below.

[High Refractive Index Layer]

The high refractive index layer includes at least one polymer of polyester, polycarbonate, and poly(meth)acrylate, as well as metal oxide particles.

(Metal Oxide Particle)

As the metal oxide particles, a metal oxide can be used which have one or more metals selected from the group consisting of Li, Na, Mg, Al, Si, K, Ca, Sc, Ti, V, Cr, Mn, Fe, Co, Ni, Cu, Zn, Rb, Sr, Y, Nb, Zr, Mo, Ag, Cd, In, Sn, Sb, Cs, Ba, La, Ta, Hf, W, Ir, Tl, Pb, Bi, and rare-earth metals as the metal constituting the metal oxide, and specifically, the metal oxide includes, for example, a metal oxide which meets 1.6 in refractive index (have a refractive index of 1.6 or more), among particles and composite particles such as a titanium oxide, a zinc oxide, an aluminum oxide (alumina), a zirconium oxide, a hafnium oxide, a niobium oxide, a tantalum oxide, a magnesium oxide, a barium oxide, an indium oxide, a tin oxide, and a lead oxide, and composite oxides composed of these oxides, e.g., lithium niobate, potassium niobate, lithium tantalate, and an aluminum-magnesium oxide ($MgAl_2O_4$).

In addition, rare-earth oxides can be also used as the metal oxide particles, and specifically, the oxides also include a scandium oxide, a yttrium oxide, a lanthanum oxide, a cerium oxide, a praseodymium oxide, a neodymium oxide, a samarium oxide, a europium oxide, a gadolinium oxide, a terbium oxide, a dysprosium oxide, a holmium oxide, an erbium oxide, a thulium oxide, a ytterbium oxide, and a lutetium oxide.

Metal oxide particles with a refractive index of 1.90 or more, more preferably 2.0 or more are preferred as the metal oxide particles for use in the high refractive index layer, and the metal oxide particles include, for example, a zirconium oxide, a cerium oxide, a titanium oxide, and a zinc oxide. In view of high refractive index, titanium oxide is preferred as the metal oxide particles, and it is preferable to use, in particular, rutile-type titanium oxide particles. The metal oxide particles for use in the high refractive index layer may have a single type of metal oxide particles alone, or two or more types of metal oxide particles used in combination.

In addition, the metal oxide particles are preferably 100 nm or less, more preferably 4 to 50 nm in average primary particle size from the perspective of film transparency.

The average particle size for the metal oxide particles is obtained as the simple average value (number average) for measured particles sizes of any 1,000 particles among particles themselves or particles appearing on a cross section of or a surface of the layer, which are observed under an electron microscope. The particle size of each individual particle herein is expressed as a diameter in the case of assuming a circle equivalent to the projected area of the particle.

<Titanium Oxide Particle>

In general, it is often the case that titanium oxide particles subjected to surface treatment are used for the purpose of inhibiting the photocatalytic activity of the particle surfaces or improving dispersibility in solvents, etc., and preferably treated with one of, or two or more of silica, alumina, aluminum oxide, zirconia, etc., as the surface treatment. More specifically, known are titanium oxide particles covered on the surfaces thereof with a coating layer of silica to have negatively charged particle surfaces, and titanium oxide particles with a coating layer of aluminum oxide formed thereon to have positively charged surfaces at pH 8 to 10.

Moreover, the titanium oxide particles are preferably monodispersed. The monodispersity herein refers to the degree of monodispersity of 40% or less, which is obtained from the following formula. The particles are further preferably 30% or less, particularly preferably 0.1 to 20% in degree of monodispersity.

$$\text{Degree of Monodispersity} = (\text{Standard Deviation for Particle Sizes})/(\text{Average Value for Particle Sizes}) \times 100$$

The content of the metal oxide particles in the high refractive index layer is preferably 20 to 80 mass%, more preferably 30 to 70 mass%, and further preferably 40 to 60 mass% with respect to 100 mass% of solid content in the high refractive index layer, from the perspective of infrared shielding, and from the perspective of reduction in color unevenness in the case of applying the film to glass in a curved shape.

(Polymer)

The high refractive index layer essentially includes a polymer material. As long as it is the polymer material that forms the refractive index layer, it is possible to select deposition methods such as application and spin coating. These methods are simple, have a wide range of options because the heat resistance of the surface material is not considered, and can be considered as deposition methods effective for, in particular, resin substrate materials. For example, in the cases of application type, mass production methods such as a roll-to-roll method can be adopted, which are advantageous in terms of both cost and process time. In addition, films including the polymer material have the advantage of being excellent in handling, as the films are highly flexible, thus less likely to cause these defects even when the films are taken up in the production or conveyance thereof.

The polymer included in the high refractive index layer contains at least one selected from the group consisting of polyester, polycarbonate, and poly(meth)acrylate, because the polymer is highly mixed with the metal oxide particles, and favorably deposited. The polymer constituting the high refractive index layer may have a single type of polymer, or two or more types of polymers. The content ratio of polyester, polycarbonate, and poly(meth)acrylate in the polymer is preferably 60 to 100 mass%, more preferably 80 to 100 mass% with respect to the total mass of the polymer in view of the advantageous effect mentioned above.

The polyester has a structure obtained by polycondensation of a dicarboxylic acid component and a diol component. The polyester may be a copolymer. Examples that can be used as the polyester include, for example, polyalkylene naphthalates such as polyethylene naphthalate (PEN) and isomers thereof (for example, 2,6-, 1,4-, 1,5-, 2,7-, and 2,3-PEN), polyalkylene terephthalates, (for example, polyethylene terephthalate, polypropylene terephthalate, polybutylene terephthalate, and poly-1,4-cyclohexanedimethylene terephthalate), and polyethylene diphenylates. Above all, the polyester is preferably a polyalkylene terephthalate or a polyalkylene naphthalate, more preferably a polyalkylene terephthalate, and further preferably polyethylene terephthalate, because of their great infrared shielding effects, inexpensiveness, and abilities to be used in an extremely wide variety of application.

The poly (meth) acrylate is a polymer of an acrylic acid ester or a methacrylic acid ester, examples of which include, for example, a polymethyl methacrylate, a polyethyl methacrylate, a polyisobutyl methacrylate, a polypropyl methacrylate, a polybutyl methacrylate, and a polymethyl acrylate. Above all, a polymethyl methacrylate is preferred because of its great infrared shielding effects, inexpensiveness, and ability to be used in an extremely wide variety of application.

The weight average molecular weight of the polyester, polycarbonate, and poly(meth)acrylate included in the high refractive index layer is on the order of 10,000 to 1,000,000, and preferably 50, 000 to 800, 000. It is to be noted that the value measured by gel permeation chromatography (GPC) is adopted for the weight average molecular weight.

The high refractive index layer may include therein other polymers besides the polyester, polycarbonate, and poly(meth)acrylate. The other polymers include polymers listed below as polymers for use in the low refractive index layer.

In addition, the content of the polymer in the high refractive index layer is 20 to 80 mass%, more preferably 40 to 60 mass% with respect to the total solid content in the high refractive index layer.

[Low Refractive Index Layer]

The low refractive index layer preferably includes the polymer as described in the above section on the polymer.

The polymer included in the low refractive index layer is not to be considered particularly limited, but examples of the polymer include, for example, polyethylene naphthalate (PEN) and isomers thereof (for example, 2,6-, 1,4-, 1,5-, 2,7-, and2,3-PEN), polyalkylene terephthalates, (for example, polyethylene terephthalate, polypropylene terephthalate, polybutylene terephthalate, and poly-1,4-cyclohexanedimethylene terephthalate), polyimide (for example, polyacrylic imide), polyether imide, atactic polystyrene, polycarbonate, polymethacrylates (for example, a polyisobutyl methacrylate, a polypropyl methacrylate, a polyethyl methacrylate, and a polymethyl methactylate), polyacrylate (for example, a polybutyl acrylate and a polymethyl acrylate), cellulose derivative (for example, ethyl cellulose, cellulose acetate, cellulose propionate, cellulose acetate butyrate, and cellulose nitrate), polyalkylene polymer (for example, polyethylene, polypropylene, polybutylene, polyisobutylene, and poly(4-methyl)pentene), fluorinated polymer (for example, a perfluoroalkoxy resin, polytetrafluoroethylene, a fluorinated ethylene-propylene copolymer, fluorinated vinylidene, and polychlorotrifluoroethylene), chlorinated polymer (for example, polyvinylidene chloride and polyvinyl chloride), polysulfone, polyethersulfone, polyacrylonitrile, polyamide, silicone resins, epoxy resins, polyvinyl acetate, polyether amide, ionomer resins, elastomers (for example, polybutadiene, polyisoprene, and neoprene), and polyurethane. Copolymers can be also used, such as, for example, copolymers of: PEN (for example, copolymers of 2,6-, 1,4-, 1,5-, 2,7-, and/or 2,3-naphthalenedicarboxylic acids or esters thereof; and (a) terephthalic acid or an ester thereof, (b) isophthalic acid or an ester thereof, (c) phthalic acid or an ester thereof, (d) an alkane glycol, (e) a cycloalkane glycol (for example, cyclohexane dimethanol diol), (f) an alkane dicarboxylic acid, and/or (g) a cycloalkane dicarboxylic acid (for example, a cyclohexane dicarboxylic acid)), copolymers of polyalkylene terephthalates (for example, copolymers of: terephthalic acid or an ester thereof; and (a) naphthalene dicarboxylic acid or an ester thereof, (b) isophthalic acid or an ester thereof, (c) phthalic acid or an ester thereof, (d) an alkane glycol, (e) a cycloalkane glycol (for example, cyclohexane dimethanol diol), (f) an alkane dicarboxylic acid, and/or (g) a cycloalkane dicarboxylic acid (for example, a cyclohexane dicarboxylic acid)), styrene copolymers (for example, a styrene-butadiene copolymer and a styrene-acrylonitrile copolymer), as well as copolymers of 4,4'-dibenzoic acid and ethylene glycol. Furthermore, the individual layers may each include therein a blend of two or more of the polymers or copolymers mentioned above (for example, a blend of sPS and atactic polystyrene).

Among the foregoing, the poly(meth)acrylate, polyalkylene polymers, cellulose derivatives, and the like are preferred as the polymer material included in the low refractive index layer, in terms of infrared shielding effect, the poly(meth)acrylate is more preferred, and polymethyl methacrylate is further preferred.

The weight average molecular weight of the polymer included in the low refractive index layer is on the order of 10,000 to 1,000,000, and preferably 50,000 to 800,000. It is to be noted that the value measured by gel permeation chromatography (GPC) is adopted for the weight average molecular weight.

In addition, the content of the polymer in the low refractive index layer is 50 to 100 mass%, more preferably 70 to 100 mass% with respect to the total solid content in the low refractive index layer.

The low refractive index layer may include metal oxide particles, and as the metal oxide particles, the use of silicon dioxide is preferred, and the use of colloidal silica is particularly preferred. The metal oxide particles (preferably, silicon dioxide) included in the low refractive index layer is preferably 3 to 100 nm in average particle size. The average particle size for primary particles of silicon dioxide dispersed in a primary particle state (the particle size in a dispersion liquid state before application) is more preferably 3 to 50 nm, further preferably 3 to 40 nm, particularly preferably 3 to 20 nm, and most preferably 4 to 10 nm. In addition, the average particle size for secondary particles is preferably 30 nm or less from the perspective of less haze and excellent visible light transmission properties. The average particle size for the metal oxide in the low refractive index layer is obtained as the simple average value (number average) for measured particles sizes of any 1,000 particles among particles themselves or particles appearing on a cross section of or a surface of the refractive index layer, which are observed under an electron microscope. The particle size of each individual particle herein is expressed as a diameter in the case of assuming a circle equivalent to the projected area of the particle.

Colloidal silica is obtained by double decomposition of sodium silicate with an acid or the like, or by heating for aging silica sol obtained by passing through an ion-exchange resin layer, and disclosed in, for example, Japanese Patent Application Laid-Open No. 57-14091, Japanese Patent Application Laid-Open No. 60-219083, Japanese Patent Application Laid-Open No. 60-219084, Japanese Patent Application Laid-Open No. 61-20792, Japanese Patent Application Laid-Open No. 61-188183, Japanese Patent Application Laid-Open No. 63-17807, Japanese Patent Application Laid-Open No. 4-93284, Japanese Patent Application Laid-Open No. 5-278324, Japanese Patent Application Laid-Open No. 6-92011, Japanese Patent Application Laid-Open No. 6-183134, Japanese Patent Application Laid-Open No. 6-297830, Japanese Patent Application Laid-Open No. 7-81214, Japanese Patent Application Laid-Open No. 7-101142, Japanese Patent Application Laid-Open No. 7-179029, Japanese Patent Application Laid-Open No. 7-137431, and International Publication No. 94/26530. For such colloidal silica, synthesized products may be used, or commercially available products may be used. The colloidal silica may have a surface subjected to cation modification, or subjected to treatment with Al, Ca, Mg, Ba, or the like.

The content of the metal oxide particles in the low refractive index layer is preferably 0 to 50 mass%, and more preferably 0 to 30 mass% with respect to 100 mass% of solid content in the low refractive index layer, from the perspective of infrared shielding.

In addition, various types of additives can be added to the high refractive index layer and low refractive index layer according to the present invention, if necessary.

The layers may contain various types of known additives, such as, for example, ultraviolet absorbers described in Japanese Patent Application Laid-Open No. 57-74193, Japanese Patent Application Laid-Open No.57-87988, and Japanese Patent Application Laid-Open No. 62-261476, antifading agents described in Japanese Patent Application Laid-Open No. 57-74192, Japanese Patent Application Laid-Open No. 57-87989, Japanese Patent Application Laid-Open No. 60-72785, Japanese Patent Application Laid-Open No. 61-146591, Japanese Patent Application Laid-Open No. 1-95091, and Japanese Patent Application Laid-Open No. 3-13376, etc., various types of anionic, cationic, or non-ionic surfactants, fluorescent brighteners described in Japanese Patent Application Laid-Open No. 59-42993, Japanese Patent Application Laid-Open No. 59-52689, Japanese Patent Application Laid-Open No. 62-280069, Japanese Patent Application Laid-Open No. 61-242871, and Japanese Patent Application Laid-Open No. 4-219266, etc., pH adjusters such as sulfuric acid, phosphoric acid, acetic acid, citric acid, sodium hydroxide, potassium hydroxide, and potassium carbonate, antifoamers, lubricants such as diethylene glycol, preservatives, antistatic agents, and matting agents.

[Substrate]

If necessary, a substrate may be used for the infrared shielding film.

As the substrate for the infrared shielding film, various resin films can be used, polyolefin films (polyethylene, polypropylene, etc.), polyester films (polyethylene terephthalate, polyethylene naphthalate, etc.), polyvinyl chloride, cellulose triacetate, etc. can be used, and the polyester films are preferred. The polyester films (hereinafter, referred to as polyester) are not to be considered particularly limited, but preferably polyester which contains a dicarboxylic acid component and a diol component as main constituents, and has film forming performance.

Examples of the dicarboxylic acid component as the main constituent can include a terephthalic acid, an isophthalic acid, a phthalic acid, 2,6-naphthalene dicarboxylic acid, 2,7-naphthalene dicarboxylic acid, diphenylsulfone dicarboxylic acid, diphenylether dicarboxylic acid, diphenylethane dicarboxylic acid, cyclohexane dicarboxylic acid, diphenyl dicarboxylic acid, diphenylthioether dicarboxylic acid, diphenyl ketone dicarboxylic acid, and phenylindane dicarboxylic acid. In addition, examples of the diol component can include ethylene glycol, propylene glycol, tetramethylene glycol, cyclohexanedimethanol, 2,2-bis(4-hydroxyphenyl)propane, 2,2-bis(4-hydroxyethoxyphenyl)propene, bis(4-hydroxyphenyl)sulfone, bisphenolfluorenedihydroxyethylether, diethylene glycol, neopentyl glycol, hydroquinone and cyclohexane diol. Among polyesters containing these components as main constituents, polyesters containing, as the main constituents, a terephthalic acid or 2,6-naphthalene dicarboxylic acid as the dicarboxylic acid component and ethylene glycol or 1,4-cyclohexanedimethanol as the diol component are preferred in terms of transparency, mechanical strength, dimensional stability, etc. Above all, preferred are polyesters containing polyethylene terephthalate or polyethylene naphthalate as a main constituent, copolymerized polyesters composed of a terephthalic acid, 2,6-naphthalene dicarboxylic acid, and ethylene glycol, and polyesters containing, as a main constituent, a mixture of two or more of the polyesters.

The film support for use in the present invention is preferably 10 to 300 $\mu$m, in particular, 20 to 150 $\mu$m in thickness. In addition, the film support according to the present invention may have two films stacked, and in this case, the films may be the same or different in type.

[Infrared Shielding Film]

While the infrared shielding film according to the present invention only has to be configured (laminated film) by stacking at least one unit composed of the high refractive index layer and the low refractive index layer, the total number of high refractive index layers and low refractive index layers preferably has an upper limit of 100 layers or less, that is, 50 units or less. More specifically, the upper limit is 40 layers (20 units) or less, further preferably 20 layers (10 units) or less. The lower limit of the range of the total layer number is not to be considered particularly limited, but preferably 5 layers or more. As described above, the film in this application has the high refractive index layer containing therein the metal oxide particles, thus has a reduced number of layers stacked, as compared with conventional films in polymer stacking forms, and can be made a thin film. The reduced number of layers can improve productivity, and prevent transparency from being decreased by scattering at stacking interfaces.

In addition, the infrared shielding film according to the present invention only has to be configured by stacking at least one of the units described above, and may be, for example, a laminated film that has the uppermost layer and lowermost layer both composed of high refractive index layers or low refractive index layers.

In the case of the infrared shielding film according to the present invention, the high refractive index layer preferably has a refractive index of 1.70 to 2.50, more preferably 1.80 to 2.20, and further preferably 1.90 to 2.20. In addition, the low refractive index layer according to the present invention preferably has a refractive index of 1.10 to 1.60, more preferably 1.30 to 1. 55, and further preferably 1.30 to 1.50.

While it is preferable to design a large difference in refractive index between the high refractive index layer and the low refractive index layer in the infrared shielding film from the perspective of being able to increase the infrared reflectivity with a small number of layers, the difference in refractive index between the adj acent high refractive index layer and low refractive index layer is preferably 0.1 or more, more preferably 0.3 or more, and further preferably 0.4 or more, for at least one of the units composed of the high refractive index layer and low refractive index layer in the present invention.

While the difference in refractive index between the adjacent high refractive index layer and low refractive index layer is preferably 0.1 or more in the infrared shielding film according to the present invention, all of the refractive index layers preferably meet the requirement specified in the present invention, in the case that each high refractive index layer and low refractive index layer has multi layers as described above. However, the uppermost layer and the lowermost layer may be configured out of the requirement specified in the present invention.

The reflectivity in a specific wavelength range is determined by the difference in refractive index between adjacent two layers (high refractive index layer and low refractive index layer) and the number of layers stacked, and the increased difference in refractive index achieves the same reflectivity with a smaller number of layers. The difference in refractive index and the required number of layers can be calculated with the use of commercially available optical design software. For example, for the achievement of an infrared shielding ratio of 90% or more, the difference in refractive index less than 0.1 requires more than 100 layers staked, thereby resulting in not only decreased productivity, but also increased scattering at the stacking interfaces, and thus decreased transparency. From the perspective of improving the reflectivity and reducing the number of layers, the difference in refractive index substantially has an upper limit on the order of 1.40, although the difference has no upper limit.

The difference between the refractive indexes of both the high refractive index layer and low refractive index layer, which are obtained in accordance with the following method, is regarded as the difference in refractive index.

Each refractive index layer is prepared as a single layer (with the use of the substrate, if necessary), this sample is cut into 10 cm × 10 cm, and the refractive index thereof is then obtained in accordance with the following method. With the use of U-4000 type (from Hitachi, Ltd.) as a spectrophotometer, the surface (rear surface) on the side opposite to the measurement surface for each sample is subjected to surface roughening, and then light absorption treatment with a black spray to prevent light reflection at the rear surface, the reflectivity in a visible light range (400 nm to 700 nm) is measured at 25 points under the condition of 5° regular reflection to figure out the average value, and from the measurement result, the average refractive index is figured out.

As compared with conventional infrared shielding films obtained by laminating only polymers, the high refractive index layer contains the metal oxide particles, the refractive index of the high refractive index layer can be thus increased, and it becomes possible to achieve a high infrared resistivity even when the number of units of the high and low refractive index layers stacked is reduced to make a thin film.

The infrared shielding film according to the present invention is preferably 12 μm to 315 μm, more preferably 15 μm to 200 μm, and further preferably 20 μm to 100 μm in total thickness.

It is to be noted that the terms "high refractive index layer" and "low refractive index layer" mean that when the difference in refractive index is compared between the two adj acent layers, the refractive index layer which is higher in refractive index is regarded as the high refractive index layer, whereas the refractive index layer which is lower in refractive index is regarded as the low refractive index layer. Accordingly, the terms "high refractive index layer" and "low refractive index layer" are intended to encompasses all embodiments except for embodiments in which respective refractive index layers have the same reflectivity, when attention is focused on two adjacent refractive index layers among respective refractive index layers constituting an optical reflection film.

Moreover, as optical properties of the infrared shielding film according to the present invention, the transmission in a visible light range, which is measured in accordance with JIS R3106-1998, is preferably 50% or more, and the wavelength range of 900 nm to 1400 nm preferably has a range with reflectivity in excess of 50%.

The thickness (thickness after drying) per refractive index layer is preferably 20 to 1000 nm, more preferably 50 to 500 nm.

The infrared shielding filmmayhave, for the purpose of adding further functions, one or more of functional layers such as conductive layers, antistatic layers, gas barrier layer, easily adhesive layers (adhesive layers), antifouling layers, freshener layers, droplet flow layers, easily lubricant layers, hard coating layers, abrasion-resistant layers, antireflection layers, electromagnetic shielding layer, ultraviolet absorbing layers, infrared absorbing layers, printing layers, fluorescent layers, hologram layers, peeling layers, tacky layers, adhesive layers, infrared cutoff layers (metal layers, liquid crystal layers) other than the high refractive index layer and low refractive index layer according to the present invention, and coloring layers (visible light absorbing layers).

[Laminated Glass]

The infrared shielding film according to the present invention can be applied in a wide range offields. For example, as a window film such as a heat reflective film attached to a facility (base substrate) exposed to sunlight for a long period of time, e.g., an outdoor window of a building or a car window for producing a heat reflection effect, a film for agricultural greenhouse, etc., the infrared shielding film is used mainly for the purpose of enhancing weather resistance. In particular, a member is preferred which has the infrared shielding film according to the present invention attached to a base substrate of glass with an interlayer film interpose therebetween.

In addition, when a conventional infrared shielding film formed by laminating polymers is applied to glass in a curved shape, various reflections of visible light are caused by heterogeneity of the difference in refractive index. Because the infrared shielding film according to the present invention has a reduced angle dependence of the refractive index, the application of the film to glass in a curved shape can achieve a sufficient infrared shielding effect, and reduce color unevenness caused by reflections of visible light.

The laminated glass can be used for buildings, dwelling houses, automobiles, etc.

Fig. 1 shows an embodiment of the laminated glass. The laminated glass in Fig. 1 is structured to have an infrared shielding film 3 sandwiched between two glass plates 1 through the use of two interlayer films 2. The infrared shielding film 3 is the infrared shielding film according to the present invention as described above. The other constituent members of the laminated glass will be described below.

(Interlayer Film)

For the interlayer film any film can be used as long as the filmhas adhesion performance for attaching the infrared shielding film and glass to each other.

The interlayer film preferably contains a resin material such as a polyvinyl butyral resin or an ethylene-vinyl acetate copolymer resin. Specifically, the interlayer film contains a plastic polyvinyl butyral [e.g., from Sekisui Chemical Co., Ltd., Mitsubishi Monsanto Chemical Co.], an ethylene-vinyl acetate copolymer [from DuPont, Takeda Pharmaceutical Company Limited, Duramin], a modified ethylene-vinyl acetate copolymer [from Tosoh Corporation, Melthene G], etc. These resin materials are preferably 80 to 100 mass% with respect to 100 mass% of the interlayer film.

The interlayer film may be composed of a single layer of the resin film mentioned above, or may be used in the form of two or more layers stacked. In addition, the two interlayer films may be composed of the same type of resin, or composed of different types of resins.

Further, the interlayer films preferably contain, in terms of heat shielding effect, heat shielding fine particles of 0.2 $\mu$m or less in average particle size, which have a heat shielding and absorbing capacity. The use of the interlayer films containing the heat shielding fine particles also has the effect of reducing color unevenness caused by reflections of visible light when the film is applied to glass in a curved shape. This is believed to be because scattering and absorption by the heat shielding fine particles make the reflections of visible light less noticeable.

Examples of the heat shielding fine particles include metals of Sn, Ti, Si, Zn, Zr, Fe, Al, Cr, Co, Ce, In, Ni, Ag, Cu, Pt, Mn, Ta, W, V, and Mo, oxides, nitrides, and sulfides thereof, which may be doped with Sb, Sn, or F, each by itself, or composites of at least two or more selected therefrom, and the fine particles are preferably an antimony doped tin oxide (ATO) or an indium tin oxide (ITO).

The average particle size for the heat shielding fine particles is 0.2 $\mu$m or less because the heat shielding effect can be ensured while suppressing the reflections of visible light, and because transparency can be ensured without the deterioration of haze by scattering, but preferably 0.15 $\mu$m or less. It is to be noted that the lower limit of the average particle size is not to be considered particularly limited, but preferably 0.10 $\mu$m or more. The average particle size is obtained as the simple average value (number average) for measured particles sizes of any 1,000 particles among particles themselves or particles appearing on a cross section of or a surface of the refractive index layer, which are observed under an electron microscope. The particle size of each individual particle herein is expressed as a diameter in the case of assuming a circle equivalent to the projected area of the particle.

The content of the heat shielding fine particles is not to be considered particularly limited, but in terms of heat shielding effect, preferably 0.5 to 10 mass%, more preferably 0.5 to 5 mass% with respect to the total mass of the interlayer film.

Further, ultraviolet absorbers, antioxidants, antistatic agents, heat stabilizers, lubricants, fillers, colorants, adhesion modifiers, etc. may be appropriately added to and blended with the interlayer.

The interlayer typically has a film thickness on the order of 0.1 to 2 mm.

(Glass Plate)

The type of the glass plate is not to be considered particularly limited, but may be selected depending on light transmission performance or thermal insulation performance, and may be inorganic glass or organic glass.

The inorganic glass plate is not to be considered particularly limited, example of which include various types of inorganic glass such as float plate glass, polished plate glass, figured plate glass, wired plate glass, lined plate glass, heat-absorbing plate glass, and colored plate glass. Examples of the organic glass include glass plates composed of resins such as polycarbonates, polystyrenes, and polymethylmethacrylates. These organic glass plates may be laminates obtained by stacking multiple sheets composed of the resins mentioned above. Even in regard to color, the glass plate is not limited to transparent glass plates, but various colors of glass plates can be used such as general-purpose green, brown, and blue glass plates for use in vehicles, etc. The glass plates may be the same type of glass plates, or two or more types of glass plates may be used in combination.

The glass plate preferably has a thickness on the order of 1 to 10 mm in consideration of strength and transmission of infrared light in a visible light range.

In the case of curved glass plates, the glass plates preferably have a radius of curvature of 0.5 to 2.0 m. As long as the radius of curvature of the glass plate falls within this range, the infrared shielding film can follow the curved shape of the glass.

[Method for Producing Infrared Shielding Film]

The method for producing the infrared shielding film according to the present invention is not particularly limited, but any method can be used as long as the method can form at least one unit composed of a high refractive index layer and a low refractive index layer.

The method for producing the infrared shielding film according to the present invention forms the film by stacking a unit composed of the high refractive index layer and the low refractive index layer. Specifically, examples of the method include: (1) a method of forming a laminate by alternately applying the high refractive index layer and the low refractive index layer onto a substrate, and drying the layers; and (2) a method of forming a film by drawing a laminate after the formation of the laminate by co-extrusion. According to the present invention, the high refractive index layer contains therein the metal oxide, and films can be thus prepared by both the production methods (1) and (2) mentioned above. Above all, the method (2) through the use of the co-extrusion step is preferred because thin-film laminates with film thickness uniformity can be formed while the infrared shielding effect is increased without depending on the angle of incident light.

For example, a roll coating method, a rod bar coating method, an air knife coating method, a spray coating method, a curtain coating method, or a slide bead coating method with the use of a hopper as described in the U.S. Patents Nos. 2,761,419 and 2,761,791, an extrusion coating method, and the like are used in a preferred manner, as the application method in the method (1) mentioned above.

Specific examples of the method (1) include the following embodiments: (1) a method of forming a film by applying a high refractive index layer application liquid onto a substrate and drying the liquid to form a high refractive index layer, and then applying a low refractive index layer application liquid and drying the liquid to form a low refractive index layer; (2) a method of forming a film by applying a low refractive index layer application liquid onto a substrate and drying the liquid to form a low refractive index layer, and then applying a high refractive index layer application liquid and drying the liquid to form a high refractive index layer; (3) sequentially applying, onto a substrate, and drying a high refractive index layer application liquid and a low high refractive index layer application liquid for multiple layers to form a film including high refractive index layers and low refractive index layers; and (4) simultaneously applying, onto a substrate, and drying a high refractive index layer application liquid and a low high refractive index layer application liquid for multiple layers to form a film including high refractive index layers and low refractive index layers.

The organic solvents for adjusting the respective refractive index layer application liquids are appropriately selected depending on the types polymers used. Specifically, examples of the organic solvents include alcohols such as methanol, ethanol, 2-propanol, and 1-butanol; esters such as ethyl acetate, 2-methoxyethyl acetate, butyl acetate, propylene glycol monomethylether acetate, and propylene glycol monoethylether acetate; ethers such as diethyl ether, propylene glycol monomethylether, and ethylene glycol monoethylether; amides such as dimethylformamide and N-methylpyrrolidone; and ketones such as acetone, methyl ethyl ketone, acetyl acetone, and cyclohexanone. These organic solvents may be used alone, or two or more thereof may be used in mixture. Among these solvents, ethyl acetate is preferred, and 2-methoxyethyl acetate is more preferred.

The concentrations of the solvents in the respective refractive index layer application liquids are preferably 80 to 100 mass%.

The co-extrusion step in the method (2) can use the method described in the U.S. Patent No. 6,049,419. More specifically, the high refractive index layer and the low refractive index layer can be formed by using a co-extrusion method from a polymer as a high refractive index layer material, metal oxide particles, and other additives (compositions for the formation of the high refractive index layer), as well as a polymer as a low refractive index layer material and other additives (compositions for the formation of the low refractive index layer).

As an embodiment, the respective refractive index layer materials can be melted at 100 to 400°C, so as to reach appropriate viscosity, and if necessary, with the addition of various types of additives, both of the polymers can be extruded through an extruder, so as to provide two alternate layers.

Prior to the melting, the polymers, and other additives added if necessary, are preferably mixed before being melted. The mixing may be carried out with a mixer or the like. In addition, while the mixture may be directly melted to form a film with the use of an extruder, after pelletizing the mixture once, the pellet may be melted to form a film with the use of an extruder.

For the extruder, various extruders are able to be used which are available in the market, but melting-kneading extruders are preferred, which may be single-screw extruders or twin-screw extruders.

It is to be noted that it is preferable to use a twin-screw extruder in the case of directly forming a film without preparing any pellet from the mixture because an appropriate degree of kneading is required, while it is even possible to use single-screw extruders because appropriate kneading is achieved by changing the shape of the screw to a kneading-type screw such as a Maddock type, Unimelt, and Dulmage. In addition, in the case of using a pellet, it is possible to use both single-screw extruders and twin-screw extruders.

Further, during the kneading, the oxygen concentration is preferably lowered by replacement with an inert gas such as a nitrogen gas or reduction in pressure.

Next, the laminated film extruded is solidified by cooling through a cooling drum or the like to obtain a laminate.

Thereafter, this laminate can be heated, and then drawn in two directions to obtain an infrared shielding film.

As the drawing method, the undrawn film obtained by detachment from the cooling drum described previously is heated within the range from the glass transition temperature (Tg) - 50°C to Tg + 100°C through a heating device such as a group of rolls and/or an infrared heater, and subjected to single-stage or multiple-stage vertical drawing in the direction of conveying the film (also referred to as a longitudinal direction). Next, the drawn film obtained in the way described above is also preferably drawn in a direction perpendicular to the direction of conveying the film (also referred to as a width direction). In order to draw the film in the width direction, it is preferable to use a tentering machine.

In the case of drawing in the direction of conveying the film or the direction perpendicular to the direction of conveying the film, the film is preferably drawn at a ratio of 1.5 to 5.0, more preferably within the range of 2.0 to 4.0.

In addition, thermal processing can be also carried out following the drawing. The thermal processing is preferably carried out within the range from Tg - 100°C to Tg + 50°C while conveying typically for 0.5 to 300 seconds.

The thermal processing means is not particularly limited, but can be typically put into practice with hot air, infrared rays, heating rolls, microwaves, etc., and preferably put into practice with hot air in terms of simpleness. The heating of the film is preferably increased in a stepwise fashion.

The thermally processed film is typically cooled down to Tg or lower, and taken up with clip grasping parts cut off at both ends of the film. In addition, for the cooling, slow cooling is preferred at a cooling rate of 100°C or lower/second, from the final thermal processing temperature to Tg.

The means for cooling is not particularly limited, but can be put into practice with conventionally known means, and in particular, it is preferable to perform these processes while sequential cooling in more than one temperature range, in terms of improvement in film dimensional stability. It is to be noted that the cooling rate refers to a value obtained from (T1 - Tg)/t in the case of regarding the final thermal processing temperature as T1 and regarding the time for the film from the final thermal processing temperature to reaching Tg as t.

[Method for Producing Laminated Glass]

A preferred embodiment for laminated glass according to the present invention includes: a step of obtaining an infrared shielding film by forming a high refractive index layer and a low refractive index layer through co-extrusion with the use of a composition for the formation of a high refractive index layer, which includes at least one selected from the group consisting of polyester, polycarbonate, and poly(meth)acrylate and metal oxide particles, and a composition for the formation of a low refractive index layer; and sandwiching the infrared shielding film between a pair of interlayer films, and further sandwiching the infrared shielding film and the interlayer films between a pair of glass plates. The step of obtaining the infrared shielding film is as described above.

The method for producing laminated glass is not particularly limited, but conventional methods for producing laminated glass can be used. For example, laminated glass can be produced in such a way that an interlayer film, the infrared shielding film, and an interlayer film are sandwiched in this order between two glass plates, the stacked product is treated by passing through pressing rolls, or preferably put in a rubber bag and subjected to suction under reduced pressure for evacuating air remaining between the glass plates and the interlayer films, and if necessary, preliminarily bonded at approximately 70 to 110°C to provide a laminate, and this evacuated laminate is then put in an autoclave or pressed, and mainly bonded at approximately 120 to 150°C and approximately 1 to 1.5 MPa.

## EXAMPLES

The present invention will be specifically described below with reference to Examples, but is not to be considered limited by the Examples.

(Preparation of Resin Pellet 1)

A kneading apparatus, Labo Plasto Mill Type C (from Toyo Seiki Seisaku-Sho, Ltd.) was equipped with a mixer: KF70 and a rotor: high shear type, for kneading at a preset temperature of 150°C and 300 rpm, thereby preparing a resin pellet 1 containing zinc oxide fine particles. The following materials were together added to the mixer so that the content of the metal oxide particles was 50 mass%, and kneaded under a nitrogen atmosphere.

Resin: PMMA Resin ACRYPET VH (from Mitsubishi Rayon Co., Ltd.)

Metal Oxide Particles: Zinc Oxide (from TAYCA CORPORATION, MZ-500, Average Primary Particle Size: 25 nm, Refractive Index: 1.95)

(Preparation of Resin Pellet 2)

In the same way as the method for preparing the resin pellet 1, the following materials were used to prepare a resin pellet 2 containing titanium oxide fine particles. The following materials were together added to the mixer so that the content of the metal oxide particles was 50 mass%, and kneaded under a nitrogen atmosphere.

Resin: PMMA Resin ACRYPET VH (from Mitsubishi Rayon Co., Ltd.)

Metal Oxide Particles: Rutile-Type Titanium Oxide (from ISHIHARA SANGYO KAISHA, LTD., Aluminum Hydroxide Surface Treatment, TTO-55A, Particle Size: 30 to 50 nm, Refractive Index: 2.60)

(Preparation of Resin Pellet 3)

In the same way as the method for preparing the resin pellet 1, the following materials were used to prepare a resin pellet 3 containing titanium oxide fine particles. The following materials were together added to the mixer so that the content of the metal oxide particles was 50 mass%, and kneaded under a nitrogen atmosphere.

Resin: PET Resin TRN-8580FC (from Teijin Chemicals Ltd.)

Metal Oxide Particles: Rutile-Type Titanium Oxide (from ISHIHARA SANGYO KAISHA, LTD., TTO-55A, Aluminum Hydroxide Surface Treatment, Particle Size: 30 to 50 nm, Refractive Index: 2.60) (Preparation of Resin Pellet 4)
In the same way as the method for preparing the resin pellet 1, the following materials were used to prepare a resin pellet 4 containing titanium oxide fine particles. The following materials were together added to the mixer so that the content of the metal oxide particles was 50 mass%, and kneaded under a nitrogen atmosphere.

Resin: Polycarbonate Resin Iupilon HL-4000 (from Mitsubishi Engineering-Plastics Corporation)

Metal Oxide Particles: Rutile-Type Titanium Oxide (from ISHIHARA SANGYO KAISHA, LTD., TTO-55A, Aluminum Hydroxide Surface-Treated Product, Particle Size: 30 to 50 nm, Refractive Index: 2.60) (Formation of Optical Film)

(Preparation of Infrared Shielding Film 1)

In accordance with the melting-extruding method described in the U.S. Patent No. 6,049,419, polyethylene naphthalate (PEN) TN8065S (from Teijin Chemicals Ltd.) and polymethyl methacrylate (PMMA) resin ACRYPET VH (from Mitsubishi Rayon Co., Ltd.) were melted at 300°C, laminated by extrusion, drawn horizontally and vertically at a ratio of approximately 3, so as to achieve (PMMA (152 nm)/PEN (137 nm)) 64/(PMMA (164 nm)/PEN (148 nm)) 64/(PMMA (177 nm)/PEN (160 nm) 64/ (PMMA (191 m) /PEN (173 nm)) 64, and then subjected to heat fixation and cooling to obtain an infrared shielding film 1 of alternately stacked 256 layers in total. In this case, in the layer configuration mentioned above, the " (PMMA (152 nm) /PEN (137 nm)) 64" means that a unit of PMMA of 152 nm in film thickness and PEN of 137 nm in film thickness laminated in this order is stacked 64 times.

(Preparation of Infrared Shielding Film 2)

Onto a polyethylene terephthalate (PET) film (A4300: both-sided easily adhesive layer, from Toyobo Co., Ltd.) of 50 μm in thickness, the following application liquid for low refractive index layers and application liquid for high refractive index layers were sequentially applied for multiple layers so that the dried film thickness was high refractive index layer (120 nm) /low refractive index layer (157 nm), thereby providing an infrared shielding film 2 of alternately stacked 20 layers in total.
Application Liquid for Low Refractive Index Layers : Liquid of 10 parts by mass of PMMA ACRYPET VH (Mitsubishi RayonCo., Ltd.) dissolved in 90 parts by mass of 2-methoxyethyl acetate
Application Liquid for High Refractive Index Layers: 5 parts by mass of Resin Pellet 1 dissolved in 95 parts by mass of 2-methoxyethyl acetate

(Preparation of Infrared Shielding Film 3)

In accordance with the same method as for the infrared shielding film 2, onto a polyethylene terephthalate (PET) film (A4300: both-sided easily adhesive layer, from Toyobo Co., Ltd.) of 50 μm in thickness, the following application liquid for low refractive index layers and application liquid for high refractive index layers were sequentially applied for multiple layers such that the dried film thickness was high refractive index layer (120 nm)/low refractive index layer (157 nm), thereby providing an infrared shielding film 3 of alternately stacked 20 layers in total.
Application Liquid for Low Refractive Index Layers: Liquid of 10 parts by mass of PMMA ACRYPET VH (Mitsubishi RayonCo., Ltd.) dissolved in 90 parts by mass of 2-methoxyethyl acetate
Application Liquid for High Refractive Index Layers: 5 parts by mass of Resin Pellet 2 dissolved in 95 parts by mass of 2-methoxyethyl acetate

(Preparation of Infrared Shielding Film 4)

In accordance with the melting-extruding method described in the U.S. Patent No. 6,049,419, PMMA ACRYPET VH (Mitsubishi Rayon Co., Ltd.) for use in low refractive index layers and the pellet 2 for use in high refractive index layers were melted at 300°C, laminated by extrusion, drawn horizontally at a ratio of 3 and vertically at a ratio of 3, so as to achieve high refractive index layer (120 nm) /low refractive index layer (157 nm), and then subjected to heat fixation and cooling to obtain an infrared shielding film 4 of alternately stacked 20 layers in total.

(Preparation of Infrared Shielding Film 5)

In accordance with the melting-extruding method described in the U.S. Patent No. 6,049,419, PMMA ACRYPET VH (Mitsubishi Rayon Co., Ltd.) for use in low refractive index layers and the pellet 3 for use in high refractive index layers were melted at 300°C, laminated by extrusion, drawn horizontally at a ratio of 3 and vertically at a ratio of 3, so as to achieve high refractive index layer (120 nm) /low refractive index layer (157 nm), and then subjected to heat fixation and cooling to obtain an infrared shielding film 5 of alternately stacked 20 layers in total.

(Preparation of Infrared Shielding Film 6)

In accordance with the melting-extruding method described in the U.S. Patent No. 6,049,419, PMMA ACRYPET VH (Mitsubishi Rayon Co., Ltd.) for use in low refractive index layers and the pellet 4 for use in high refractive index layers were melted at 300°C, laminated by extrusion, drawn horizontally at a ratio of 3 and vertically at a ratio of 3, so as to achieve high refractive index layer (120 nm) /low refractive index layer (157 nm), and then subjected to heat fixation and cooling to obtain an infrared shielding film 6 of alternately stacked 20 layers in total.

(Preparation of Laminated Glass)

The prepared infrared shielding films 1 to 4 were used to prepare laminated glass 1 (Comparative Example 1) and laminated glass 2 to 4 (Examples 1 to 3) by the following method.

A first glass plate of 2 mm in thickness, a polyvinyl butyral (S-LEC B from Sekisui Chemical Co., Ltd.) interlayer film (0.4 mm) (hereinafter, referred to as a PVB interlayer film), an infrared shielding film, a PVB interlayer film, and a second glass plate of 2 mm in thickness were stacked as a configuration, and the stacked product was put in a vacuum bag, in which the pressure reduced with a vacuum pump. The vacuum bag under reduced pressure was placed in an autoclave, and treated by heating under pressure to 90°C for 30 minutes. The inside of the autoclave was returned to the atmospheric pressure and ordinary temperature, the laminate was taken out of the vacuum bag, again heated under pressure to 130°C for 30 minutes in the autoclave, and then returned to ordinary temperatures and pressures to prepare laminated glass.

(Evaluation)

<Heat Shield Test>

A thermocouple was placed inside a wooden box of Length × Width × Height = 30 × 30 × 33 cm with the prepared laminated glass 1 to 4 attached to one side of the box. 500 W halogen lamps were placed as light sources in a direction perpendicular to and in a direction at an angle of 30 degrees to the glass surface of an opening (size: 23 × 26 cm) of the box, and turned on to measure increases in temperature after 30 minutes. The results are shown in Table 1.

(Preparation of Curved Laminated Glass)

(Preparation of Curved Laminated Glass 5)

(Comparative Example 2)

With the use of glass with a radius of curvature of 0.9 m, which was formed by heating plate glass of 2 mm in thickness, a first glass plate, a PVB interlayer film, the infrared shielding film 1, a PVB interlayer film, and a second glass plate were stacked as a configuration to prepare curved laminated glass 5 in the same way as in Example 1.

(Preparation of Curved Laminated Glass 6)

(Example 4)

Except for the use of the infrared shielding film 4, curved laminated glass 6 was prepared in the same way as the method for preparing the curved laminated glass 5.

(Preparation of Curved Laminated Glass 7)

(Example 5)

Except for the use of the infrared shielding film 5, curved laminated glass 7 was prepared in the same way as the method for preparing the curved laminated glass 5.

(Preparation of Curved Laminated Glass 8)

(Example 6)

Except for the use of the infrared shielding film 6, curved laminated glass 8 was prepared in the same way as the method for preparing the curved laminated glass 5.

(Preparation of Curved Laminated Glass 9)

(Comparative Example 3)

Except for the use of a PVB film with antimony-doped tin oxide (ATO) fine particles of 0.15 $\mu$m in average

particle size dispersed (the tin oxide (ATO) fine particle content of 1.0 mass% with respect to the total mass of the film) in place of the PVB interlayer film on the second glass plate side in the preparation of the curved laminated glass 5, curved laminated glass 9 was prepared by the same method as for the curved laminated glass 5. It is to be noted that the PVB film with the ATO fine particles dispersed was produced by the method described in Example 1 of Japanese Patent Application Laid-Open No. 8-259279.

(Preparation of Curved Laminated Glass 10)

(Example 7)

Except for the use of a PVB film with antimony-doped tin oxide (ATO) fine particles of 0.15 μm in average particle size dispersed (the tin oxide (ATO) fine particle content of 1.0 mass% with respect to the total mass of the film) in place of the PVB interlayer film on the second glass side in the preparation of the curved laminated glass 6, curved laminated glass 10 was prepared by the same method as for the curved laminated glass 6.

(Preparation of Curved Laminated Glass 11)

(Example 8)

Except for the use of a PVB film with antimony-doped tin oxide (ATO) fine particles of 0.15 μm in average particle size dispersed (the tin oxide (ATO) fine particle content of 1.0 mass% with respect to the total mass of the film) in place of the PVB interlayer film on the second glass side in the preparation of the curved laminated glass 8, curved laminated glass 11 was prepared by the same method as for the curved laminated glass 8.

(Evaluation)

<Color Unevenness>

The prepared laminated glass 5 to 11 was visually evaluated for surface color unevenness in accordance with the following rating. The results are shown in Table 2.

    5. Transparent without reflected colors.
    4. Slight reflected color observed without color unevenness.
    3. Uniform reflected color with color unevenness observed in places.
    2. Various reflected colors with color unevenness observed in places.
    1. Various reflected colors with significant color unevenness.

<Heat Shield Test>

A thermocouple was placed inside a wooden box of Length × Width × Height = 30 × 30 × 33 cm with the prepared laminated glass 5 to 11 attached to one side of the box. 500 W halogen lamps were placed as light sources in a direction perpendicular to the glass surface of an opening (size: 23 × 26 cm) of the box, and turned on to measure increases in temperature after 30 minutes. The results are shown in Table 2.

[Table 1]

| | | | | Increase in Temperature (°C) | |
|---|---|---|---|---|---|
| | | Low Refractive Index Layer | High Refractive Index Layer | Light Source at 0 degrees | Light Source at 30 degrees |
| Comparative Example 1 | Laminated Glass 1 | PMMA | PEN | 10 | 11 |
| Example 1 | Laminated Glass 2 | PMMA | PMMA + ZnO Particles | 10 | 7 |
| Example 2 | Laminated Glass 3 | PMMA | PMMA + TiO$_2$ Particles | 10 | 4 |

(continued)

|  |  | Low Refractive Index Layer | High Refractive Index Layer | Increase in Temperature (°C) | |
|  |  |  |  | Light Source at 0 degrees | Light Source at 30 degrees |
| Example 3 | Laminated Glass 4 | PMMA | PMMA + TiO$_2$ Particles | 10 | 3 |

[Table 2]

|  |  | Low Refractive Index Layer | High Refractive Index Layer | Evaluation Result | |
|  |  |  |  | Increase in Temperature (°C) | Color Unevenness |
| Comparative Example 2 | Curved Laminated Glass 5 | PMMA | PEN | 18 | 1 |
| Example 4 | Curved Laminated Glass 6 | PMMA | PMMA + TiO$_2$ Particles | 10 | 4 |
| Example 5 | Curved Laminated Glass 7 | PMMA | PET + TiO$_2$ Particles | 10 | 4 |
| Example 6 | Curved Laminated Glass 8 | PMMA | PC + TiO$_2$ Particles | 10 | 4 |
| Comparative Example 3 | Curved Laminated Glass 9 | PMMA | PEN | 12 | 3 |
| Example 7 | Curved Laminated Glass 10 | PMMA | PMMA + TiO$_2$ Particles | 6 | 5 |
| Example 8 | Curved Laminated Glass 11 | PMMA | PC + TiO$_2$ Particles | 6 | 5 |

In the case of the laminated glass according to Examples 1 to 3, the increase in temperature was smaller even against the oblique light, as compared with the laminated glass according to Comparative Example 1. In addition, in the case of the curved laminated glass according to Examples 4 to 8, the increase in temperature is smaller with less color unevenness, as compared with the curved laminated glass according to Comparative Examples 2 and 3.

From the results mentioned above, it is determined that the infrared shielding film according to the present invention has a high infrared shielding effect in a manner that is independent from the angle of incident light, achieved an adequate infrared shielding effect even when the infrared shielding film according to the present invention is used for glass in curved shape, and has slight color unevenness caused by reflections of visible light.

The present application is based on Japanese Patent Application No. 2011-289191 filed on December 28, 2011, and its disclosure is incorporated herein by reference in its entirety.

**Reference Signs List**

1    glass plate
2    interlayer
3    infrared shielding film
10   heat reflective laminated glass

**Claims**

1. An infrared shielding film comprising at least one unit having a high refractive index layer and a low refractive index layer stacked,
   wherein the high refractive index layer comprises at least one selected from the group consisting of a polyester, a polycarbonate, and a poly(meth)acrylate, and metal oxide particles.

2. The infrared shielding film according to claim 1, wherein the metal oxide particles are titanium oxide particles.

3. A heat reflective laminated glass comprising:

   the infrared shielding film according to claim 1 or 2;
   a pair of interlayer films for sandwiching the infrared shielding film; and
   a pair of glass plates for sandwiching the infrared shielding film and the interlayer films.

4. The heat reflective laminated glass according to claim 3, wherein the glass plates have a curved shape.

5. The heat reflective laminated glass according to claim 3 or 4, wherein the interlayer films contain heat shielding fine particles of 0.2 μm or less in average particle size.

6. A method for producing heat reflective laminated glass, the method comprising:

   a step of obtaining an infrared shielding film by forming a high refractive index layer and a low refractive index layer through co-extrusion with the use of a composition for the formation of a high refractive index layer, the composition comprising at least one selected from the group consisting of polyester, polycarbonate, and poly(meth)acrylate and metal oxide particles, and a composition for the formation of a low refractive index layer; and
   a step of sandwiching the infrared shielding filmbetween a pair of interlayer films, and further sandwiching the infrared shielding film and the interlayer films between a pair of glass plates.

FIG. 1

10

**INTERNATIONAL SEARCH REPORT**

International application No.

PCT/JP2012/081828

### A. CLASSIFICATION OF SUBJECT MATTER
*G02B5/28*(2006.01)i, *B32B7/02*(2006.01)i, *B32B27/20*(2006.01)i, *G02B5/26*
(2006.01)i

According to International Patent Classification (IPC) or to both national classification and IPC

### B. FIELDS SEARCHED

Minimum documentation searched (classification system followed by classification symbols)
G02B5/28, B32B7/02, B32B27/20, G02B5/26

Documentation searched other than minimum documentation to the extent that such documents are included in the fields searched
Jitsuyo Shinan Koho          1922-1996     Jitsuyo Shinan Toroku Koho    1996-2013
Kokai Jitsuyo Shinan Koho    1971-2013     Toroku Jitsuyo Shinan Koho    1994-2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-86659 A  (Mitsubishi Chemical Corp.),<br>23 April 2009 (23.04.2009),<br>claims 1, 6, 8; paragraphs [0001], [0008],<br>[0043], [0056], [0063], [0068], [0069], [0102],<br>[0115]; fig. 17<br>(Family: none) | 1-3,6<br>4,5 |
| X<br>Y | JP 2004-123766 A  (Toto Ltd.),<br>22 April 2004 (22.04.2004),<br>claim 1; paragraphs [0001], [0035], [0042],<br>[0094] to [0096]<br>(Family: none) | 1,2<br>3-6 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 March, 2013 (04.03.13) | Date of mailing of the international search report<br>19 March, 2013 (19.03.13) |
|---|---|
| Name and mailing address of the ISA/<br>Japanese Patent Office | Authorized officer |
| Facsimile No. | Telephone No. |

Form PCT/ISA/210 (second sheet) (July 2009)

| | INTERNATIONAL SEARCH REPORT | International application No. |
|---|---|---|
| | | PCT/JP2012/081828 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-154215 A  (Fujifilm Corp.),<br>11 August 2011 (11.08.2011),<br>claims 11, 15; paragraphs [0038], [0043],<br>[0080], [0081]; fig. 8, 9<br>& EP 2362248 A2          & CN 102141643 A | 3,5 |
| Y | JP 2007-148330 A  (Central Glass Co., Ltd.),<br>14 June 2007 (14.06.2007),<br>claims 4 to 7; paragraph [0043]<br>& US 2009/0237782 A1     & EP 1942356 A1<br>& WO 2007/049478 A1      & TWB 00I321552 | 3-5 |
| Y | JP 2005-89244 A  (Central Glass Co., Ltd.),<br>07 April 2005 (07.04.2005),<br>claim 1; paragraphs [0020], [0021], [0024] to<br>[0027], [0040]<br>& US 2007/0026210 A1     & EP 1674433 A1<br>& WO 2005/028393 A1 | 3-5 |
| Y | JP 2009-35438 A  (Central Glass Co., Ltd.),<br>19 February 2009 (19.02.2009),<br>claim 1; fig. 1<br>& US 2010/0215952 A1     & EP 2159201 A1<br>& EP 2392551 A1          & WO 2009/016955 A1<br>& CN 101784498 A         & AT 529388 T | 3,4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9936808 A
- JP 57014091 A
- JP 60219083 A
- JP 60219084 A
- JP 61020792 A
- JP 61188183 A
- JP 63017807 A
- JP 4093284 A
- JP 5278324 A
- JP 6092011 A
- JP 6183134 A
- JP 6297830 A
- JP 7081214 A
- JP 7101142 A
- JP 7179029 A
- JP 7137431 A
- JP 6026530 A
- JP 57074193 A
- JP 57087988 A
- JP 62261476 A
- JP 57074192 A
- JP 57087989 A
- JP 60072785 A
- JP 61146591 A
- JP 1095091 A
- JP 3013376 A
- JP 59042993 A
- JP 59052689 A
- JP 62280069 A
- JP 61242871 A
- JP 4219266 A
- US 2761419 A
- US 2761791 A
- US 6049419 A
- JP 8259279 A
- JP 2011289191 A